# FASCICULE DE BREVET EUROPEEN

(11) **EP 2 144 169 B1**
(45) Date de publication et mention de la délivrance du brevet: **21.09.2011**
(21) Numéro de dépôt: 09305655.4
(22) Date de dépôt: 07.07.2009
(51) Int. Cl.: G06F 13/38, G06F 3/06

(54) **Gestion d'une mémoire physique partitionnée dans une entité électronique: procédé et dispositif**
Verwaltung eines unterteilten physischen Speichers in einer elektronischen Einheit, Verfahren und Vorrichtung
Management of a physical memory partitioned in an electronic entity: method and device

(30) Priorité: 10.07.2008 FR 0854718
(43) Date de publication de la demande: 13.01.2010
(73) Titulaire: Oberthur Technologies, 92300 Levallois-Perret (FR)
(72) Inventeur: Leduc, Olivier, 69800 Saint-Priest (FR); Moyart, Didier, 69006 LYON (FR)
(74) Mandataire: Quantin, Bruno Marie Henri

(56) Documents cités:
- EP-A- 1 746 510
- US-A1- 2003 225 960
- US-A1- 2004 260 861

## Description

La présente invention concerne un dispositif de gestion de l'accès à une mémoire de stockage prévue dans une entité électronique, un procédé de gestion associé, ainsi que l'entité électronique, notamment du type entité présentant un bus série universel (USB) pour être connecté à une station hôte, par exemple une clé USB.

On connaît, par exemple de la publication EP-A-1 746 510, une gestion de l'accès à un mémoire de masse mettant en oeuvre des mécanismes de lecture/écriture avec conversion entre des adresses logiques et des adresses physiques de différents blocs physiques mémoires.

L'invention s'intéresse plus particulièrement au cas des mémoires partitionnées au sein de telles entités électroniques, notamment en raison de la demande croissante de partitions par les applications logicielles, par exemple une partition chiffrée, une partition à accès protégé, une partition en lecture/écriture, une partition en lecture seule, une partition cachée, etc.

On entend par partitionnement matériel (ou "*hardware*" selon la terminologie anglo-saxonne) d'une mémoire matérielle, le fractionnement de celle-ci en plusieurs mémoires virtuelles destinées chacune à accueillir un système de fichiers propre, par exemple FAT ("*File Allocation Table*" selon la terminologie anglo-saxonne) ou NTFS ("*New Technology FileSystem*"). Le système de fichiers permet ensuite de stocker les données..

Le partitionnement crée ainsi plusieurs mémoires logiques indépendantes les unes des autres, alors que celles-ci peuvent être matériellement mises en oeuvre sur une même mémoire physique. En effet, une mémoire matérielle étant constituée de blocs physiques mémoires, chaque partition peut ainsi regrouper une pluralité de blocs physiques mémoires qui opèrent conjointement pour fournir une mémoire logique.

Le partitionnement s'applique à tout type de mémoire matérielle, classiquement à des disques durs réels ou à des mémoires flash.

Des bus de communication sont classiquement utilisés pour assurer l'interfaçage entre l'entité électronique et la station hôte. Ces bus de communication regroupent à la fois un support physique et des moyens logiciels assurant la mise en oeuvre d'un protocole de communication sur le vecteur physique.

Un exemple classique de bus de communication utilisé pour connecter l'entité électronique à la station hôte est le bus série universel, aussi connu sous l'acronyme anglo-saxon USB. Les explications fournies par la suite s'appuieront essentiellement sur ce type de bus de communication, sans pour autant limiter la présente invention à celui-ci.

Selon la norme du même nom, le bus USB et les entités passives qui y sont connectées sont généralement esclaves dans une architecture où l'initiative revient à la station hôte (maître). Cette dernière communique avec une ou plusieurs fonctionnalités offertes par ces entités connectées. Ces fonctionnalités sont dites "fonctions USB" dont quelques exemples sont proposés dans le document US-2001/027500: une mémoire flash, un dispositif de pointage, un lecteur de piste magnétique MSR, etc.

Ces fonctions USB communiquent avec la station hôte au travers de canaux logiques de communication, également appelés "*pipes*" selon la terminologie anglo-saxonne prévue par ladite norme.

Chaque canal est formé, dans l'entité électronique USB, d'une terminaison (ou "*endpoint*" selon la terminologie anglo-saxonne) que l'on peut considérer comme un émetteur ou un récepteur de données. Chaque terminaison est, à ce titre, une structure adressable par la station hôte pour soit émettre des données en les poussant (ou *push*) sur le canal logique correspondant, soit recevoir des données en les tirant (ou *pull*) sur le canal logique correspondant.

Le fonctionnement de ces composants de la norme USB est décrit dans le document précité US-2001/027500 ainsi que dans le document US-2007/233908.

Comme il ressort de ces documents, chaque mémoire constitue une fonction USB qui nécessite deux terminaisons USB pour fonctionner en lecture/écriture.

Le partitionnement d'une mémoire physique crée autant de mémoires logiques que de partitions créées, lesquelles constituent dès lors, chacune, une fonction USB adressable de façon indépendante. Ainsi, le partitionnement requiert d'augmenter le nombre de terminaisons USB et *pipes* correspondants pour permettre la communication avec la station hôte.

Or le nombre de terminaisons disponibles sur une entité USB est limité, une première fois, à 16 par la norme, et, une deuxième fois, matériellement lors de la fabrication de l'entité électronique, par exemple à cinq comme évoqué dans le document susvisé US-2001/027500. L'ajout d'une nouvelle terminaison est, en particulier, onéreux. C'est pourquoi l'on souhaite éviter de les multiplier.

Dès lors, il existe une difficulté lorsque l'on crée des partitions d'une mémoire à l'intérieur d'une même entité USB car le nombre de terminaisons est généralement insuffisant pour permettre la communication. Par exemple, il n'est pas envisageable de prévoir plus de huit partitions utilisées de façon simultanée, car plus de 16 terminaisons seraient nécessaires. Classiquement, le nombre de terminaisons prévues lors de la fabrication de l'entité est insuffisant dès la création de trois partitions.

Le document susvisé US-2001/027500 permet, quant à lui, de redéfinir de façon dynamique l'affectation des terminaisons aux fonctions USB de sorte à pallier l'insuffisance du nombre de terminaisons au regard des fonctions prévues. Cependant cette solution n'est efficace qu'en présence d'une faible nombre de fonctions USB concurrentes ou lorsque l'on ne souhaite pas une utilisation simultanée de ces fonctions (par exemple les partitions).

Ainsi, l'invention s'intéresse de façon générale aux cas des mémoires partitionnées dans une entité électronique où des moyens de communication utilisés par chaque partition sont limités matériellement.

La présente invention vise à résoudre au moins un des inconvénients ci-dessus de l'art antérieur pour permettre l'utilisation non limitée de plusieurs partitions de mémoire au sein de l'entité électronique.

A Un aspect de l'invention est un dispositif tel que défini dans la revendication indépendante 1. Un autre aspect est une méthode comme défini dans la revendication indépendante 9. D'autres modes de réalisation de l'invention sont spécifiés dans les revendications dépendantes attenantes.

A cet effet, l'invention concerne notamment un dispositif de gestion d'une mémoire physique d'une entité électronique apte à être connectée à une station hôte, ladite mémoire physique comprenant une pluralité de partitions logiques pour le stockage de données, chaque partition étant adressable au travers d'un système de fichiers propre,

le dispositif de gestion comprenant un moyen de conversion d'adresses entre un système de fichiers principal et lesdits systèmes de fichiers propres des partitions de sorte que ladite station hôte adresse, à ladite entité électronique, les données desdites partitions logiques dans ledit système de fichiers principal.

On entend ici par "adresse" toute indication utilisée dans un système de fichiers correspondant pour localiser et identifier une donnée "adressée" afin par exemple de lire ou écrire cette donnée.

Selon l'invention, la mémoire physique est "vue" par la station hôte comme une seule partition correspondant au seul système de fichiers principal, et ce quel que soit le nombre de partitions *hardware* prévues dans la mémoire. De ce fait, dans l'exemple introduit précédemment, seules deux terminaisons USB sont nécessaires pour que la station hôte communique avec l'ensemble des partitions de la mémoire. A ce titre, le moyen de conversion officie comme une fonction USB de type similaire à celle d'une mémoire.

Au contraire des partitions en réseau, les partitions matérielles locales à l'entité physique sont transportables avec l'entité physique.

Dans un mode de réalisation, ledit dispositif de gestion comprend des moyens de réseau, en particulier un serveur réseau de type TCP (protocole de contrôle de transmissions ou "*Transmission Control Protocol*" selon la terminologie anglo-saxonne) aptes à communiquer avec ladite station hôte en utilisant ledit système de fichiers principal.

Dans un mode de réalisation, lesdites partitions correspondent chacune à un répertoire dans ledit système de fichiers principal. Selon cette

caractéristique, la conversation est simple et l'arborescence des données dans les deux systèmes de fichiers correspondants peut être conservée à l'identique. La gestion de la mémoire s'en trouve, dès lors, simplifiée.

En outre, une telle correspondance permet la mise en oeuvre simple, du côté de la station hôte, de disques réseaux virtuels correspondant, chacun, à une partition. Dans cette configuration, on réalise ainsi un double partitionnement: d'une part, le partitionnement matériel et local de la mémoire physique, d'autre part, le partitionnement logiciel et réseau de la mémoire "visible" dans le système de fichiers principal.

Par exemple, on peut prévoir que ledit moyen de conversion est apte :
- à supprimer une partie initiale d'une adresse reçue dans le système de fichiers principal de sorte à fournir une adresse dans un des systèmes de fichiers propres, et
- à ajouter une partie d'adresse renseignant ledit dispositif à une adresse reçue dans un des systèmes de fichiers propres de sorte à fournir une adresse dans le système de fichiers principal.

En variante, voire en combinaison, on prévoit que ledit moyen de conversion comprend une table de conversion associant au moins une adresse de répertoire dans ledit système de fichiers principal à une adresse dans un système de fichier de l'une desdites partitions. Ainsi, le moyen de conversion ou serveur TCP consulte cette table et substitue, pour la conversion, les portions d'adresse renseignées dans la table par la portion d'adresse correspondante.

Dans ce cas, ledit moyen de conversion est apte :
- à lire une partie initiale d'une adresse reçue ;
- à déterminer, dans ladite table de conversion, une entrée comprenant ladite partie initiale lue ;
- à lire, dans ladite entrée déterminée, l'adresse associée à ladite partie initiale ; et
- à substituer, dans ladite adresse reçue, ladite partie initiale par ladite adresse associée.

Dans un mode de réalisation, le dispositif comprend une application de configuration de ladite station hôte, ladite application de configuration étant à exécution automatique lors de la connexion de l'entité électronique à ladite station hôte et étant apte à configurer, dans le système de fichiers principal sur ladite station hôte, des disques réseaux correspondant auxdites partitions.

Corrélativement, l'invention concerne un procédé d'accès à une mémoire physique d'une entité électronique apte à être connectée à une station hôte, ladite mémoire physique comprenant une pluralité de partitions logiques pour le stockage de données, chaque partition étant adressable au travers d'un système de fichiers propre, le procédé comprenant un étape de conversion d'adresses entre un système de fichiers principal et lesdits systèmes de fichiers propres des partitions de sorte que ladite station hôte adresse, à ladite entité électronique, les données desdites partitions logiques dans ledit système de fichiers principal.

Dans un mode de réalisation, la communication entre ladite station hôte et ladite entité électronique met en oeuvre le protocole de communication selon la norme USB.

En particulier, ledit procédé comprend une étape préalable d'attribution de deux terminaisons selon la norme USB à un périphérique réseau compris dans ladite entité électronique, ledit périphérique réseau comprenant
des moyens de réseau aptes à communiquer avec ladite station hôte en utilisant ledit système de fichiers principal, et des moyens de conversion aptes à réaliser ladite étape de conversion.

De façon optionnelle, le procédé peut comprendre des étapes se rapportant aux caractéristiques de dispositif présentées ci-dessus.

Dans un mode de réalisation, le procédé comprend les étapes suivantes :
- lire une partie initiale d'une adresse reçue ;
- déterminer une adresse associée à ladite partie initiale lue ; et
- substituer, dans ladite adresse reçue, ladite partie initiale par ladite adresse associée.

En particulier, ladite détermination d'une deuxième partie comprend :
- la détermination, dans une table de conversion associant au moins une adresse de répertoire dans ledit système de fichiers principal à une adresse dans un système de fichier de l'une desdites partitions, d'une entrée comprenant ladite partie initiale lue ; et
- la lecture, dans ladite entrée déterminée, de l'adresse associée à ladite partie initiale.

L'invention a également trait à une entité électronique apte à être connectée à une station hôte, l'entité comprenant une mémoire physique comprenant elle-même une pluralité de partitions logiques pour le stockage de données, chaque partition étant adressable au travers d'un système de fichiers propre. Selon l'invention, l'entité électronique comprend un moyen de conversion d'adresses entre un système de fichiers principal et lesdits systèmes de fichiers propres des partitions de sorte que ladite station hôte adresse, à ladite entité électronique, les données desdites partitions logiques dans ledit système de fichiers principal.

De façon optionnelle, l'entité électronique peut comprendre des moyens se rapportant aux caractéristiques de dispositif et de procédé présentées ci-dessus.

Dans un mode de réalisation, ladite mémoire physique est une mémoire flash.

En particulier, ladite mémoire flash est comprise dans un module sécurisé, type carte à puce, connecté à ladite entité électronique au travers d'un lecteur de module sécurisé ou carte à mémoire conforme à la norme MMC ("*Multimedia Memory Card*"). Le serveur permet ainsi de donner ou de refuser l'accès à une partition sécurisée si l'utilisateur n'a pas renseigné son code PIN par exemple

L'entité électronique peut être de poche, tel qu'une carte à microcircuit, par exemple conforme à la norme ISO7816 ; en variante, il peut s'agir d'un autre type d'entité électronique, comme par exemple un ordinateur (tel un ordinateur personnel) ou une clé USB.

Les procédés évoqués ci-dessus sont typiquement mis en oeuvre au moyen de l'exécution des instructions d'un programme d'ordinateur par un microprocesseur. L'exécution des instructions permet ainsi le traitement par le microprocesseur des données mémorisées dans le dispositif, par exemple au sein d'une mémoire vive de celui-ci. D'autres modes de réalisation pourront toutefois être envisagés, comme par exemple l'utilisation d'un circuit à application spécifique apte à mettre en oeuvre les étapes des procédés envisagés ci-dessus.

D'autres particularités et avantages de l'invention apparaîtront encore dans la description ci-après, illustrée par les dessins ci-joints, dans lesquels :
- la **figure 1** représente un exemple de système pour la mise en oeuvre de la présente invention ;
- la **figure 2** représente, sous forme de logigramme, des étapes pour la configuration de l'entité électronique de la **figure 1** **;**
- la **figure 3** représente, sous forme de logigramme, des étapes pour la configuration de la station hôte de la **figure 1** **;**
- la **figure 4** représente, sous forme de logigramme, des étapes illustrant l'utilisation de l'entité électronique de la **figure 1** pour la lecture de données en mémoire de celle-ci ; et
- la **figure 5** représente, sous forme de logigramme, des étapes illustrant l'utilisation de l'entité électronique de la **figure 1** pour l'écriture de données en mémoire de celle-ci.

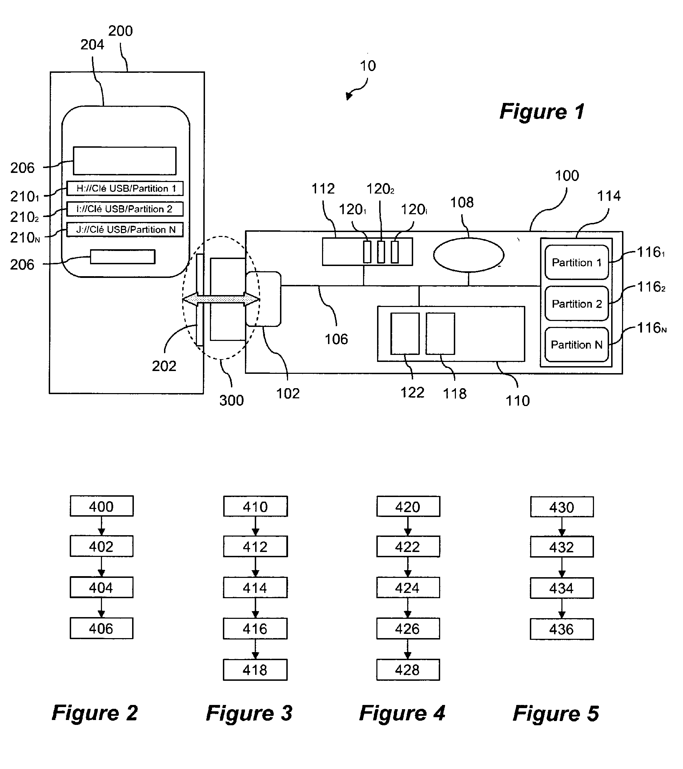

En référence avec la **figure 1****,** on décrit un exemple de système 10 pour la mise en oeuvre de l'invention.

Le système 10 en exemple comprend une entité électronique amovible 100, ici une clé USB de stockage, et une station hôte 200, ici un ordinateur personnel. En variante, l'entité électronique 100 peut être une carte à puce insérée dans un lecteur USB de carte, un équipement électronique externe muni d'un port USB, par exemple un assistant personnel. Egalement, la station hôte 200 peut être de type varié, par exemple un téléphone mobile ou un assistant personnel.

La connexion de la clé USB 100 à la station hôte 200 est réalisée au moyen d'une interface USB classique 300 composée de connecteurs USB prévus sur les deux entités et de moyens logiciels et matériels appropriés pour mettre en oeuvre le protocole de communication USB sur cette interface.

En variante, d'autres interfaces peuvent être utilisées telles que les interfaces à la norme IEEE 1394 (autrement nommées "*FireWire*").

La clé USB 100 comprend un contrôleur USB 102 connecté d'une part à un connecteur USB 104 et d'autre part à un bus interne 106. Le contrôleur USB 102 est prévu pour la gestion du protocole USB utilisé pour la connexion avec la station hôte 200. Un tel contrôleur USB 102 est brièvement décrit dans le document précité US-2007/233908 et ne sera, par conséquent, pas présenté plus en détail ici.

En variante, la fonction de connecteur USB 102 est intégrée dans un microprocesseur CPU 108 tel que présenté ci-après.

On prévoit également, dans la clé USB 100 et reliés au bus de données 106, des moyens classiques de traitement 108 type CPU ("*Central Processing Unit*"), une mémoire vive de type RAM ("*Random Access Memory*") 110 qui, associée au CPU 108, permet l'exécution de programmes, une mémoire ROM 112 comprenant les programmes de contrôle de la clé USB, par exemple un micrologiciel (sorte de micro système d'exploitation embarqué, également appelé "*Firmware*" dans la terminologie anglo-saxonne) avant chargement dans la mémoire RAM ou exécution directe par le CPU 108, et une mémoire 114 de masse pour le stockage de données, ici une mémoire flash.

Dans un mode de réalisation, plusieurs mémoires physiques 114, de nature identique ou pas, peuvent être prévues dans la même entité électronique 100 auquel cas on peut appliquer la présente invention à tout ou partie de ces mémoires. Pour la suite de la description, on fait référence, sans limiter l'invention cependant, à une seule mémoire 114 comme illustré sur la figure 1.

Selon l'invention, il est prévu que la mémoire 114 comprend N partitions 116₁, 116₂, ..., 116_{N} (N ≥ 2). D'un point de vue informatique, chaque partition 116ᵢ présente un système de fichiers propre à elle-même de telle sorte que la mémoire physique 114 apparaît à l'utilisateur direct comme plusieurs mémoires logiques. La nature des systèmes de fichiers utilisés pour la mise en oeuvre de l'invention importe peu. Ils peuvent notamment être différents entre les différentes partitions.

On a représenté, sur la figure 1, la clé USB 100 connectée à la station hôte, de sorte que le micrologiciel 118 est chargé en mémoire vive 110. Lors de l'utilisation de la clé USB 100, on prévoit alors également la présence de plusieurs terminaisons (au sens de la norme USB), généralement plus de deux: 120₁, 120₂, 120ᵢ stockées en mémoire ROM 112, ainsi que d'un serveur TCP 122 chargé en mémoire vive 110 pour son exécution.

En variante, selon la nature du CPU 108, le micrologiciel 118 et/ou le serveur TCP 112 sont directement exécutés par le CPU 108 depuis leur emplacement en mémoire ROM 112.

Deux terminaisons 120₁ et 120₂ sont ici affectées à la fonction USB mise en oeuvre par le serveur TCP 122 et disponible pour la station hôte 200 à laquelle la clé USB 100 est connectée. La première terminaison 120₁ est une terminaison "IN" en réception de données et instructions émises par la station hôte 200, conformément à la norme USB. La deuxième terminaison 120₂ est la terminaison "OUT" prévue pour l'émission de données par la clé USB 100 à l'attention de la station hôte 200. Bien entendu, les autres terminaisons 120ᵢ peuvent être affectées au serveur TCP 122 si nécessaire pour matérialiser, par exemple, plusieurs voies de communication entre la clé 100 et la station hôte 200.

D'un côté, le CPU 108 par l'exécution du programme de serveur TCP 122 est apte à recevoir et à émettre des paquets de données selon le protocole TCP sur la liaison 300, via le contrôleur 102. Ces données sont encapsulées dans un format USB, le programme de serveur TCP 122 opérant comme proxy. L'utilisation d'une liaison USB comme liaison réseau est déjà connue comme l'atteste la commercialisation de câbles réseau USB. Pour permettre cette utilisation, il est prévu un programme approprié au niveau de la station hôte 200 et de la clé USB 100. Dans le présent exemple, on prévoit que le micrologiciel embarqué 118 est développé pour incorporer cette fonctionnalité. En variante, on pourra prévoir un programme embarqué distinct du micrologiciel et exécuté lorsque la clé USB 100 est introduite dans une connectique appropriée d'une station hôte 200.

De l'autre côte, le CPU 108 exécutant le programme de serveur TCP 122 est apte à émettre des instructions internes sur le bus 106, notamment en fonction de données qu'il aura reçues selon le protocole TCP, par exemple à destination des partitions 116ᵢ pour la lecture ou le stockage de données. A cette occasion, et comme on le verra par la suite, le micrologiciel embarqué 118 et le contrôleur de la mémoire 114 (non représenté) assure la conversion des instructions internes en commandes de lecture et/ou écriture dans la mémoire 114. Cette partie de la gestion de la mémoire 114 reste classique.

Sur la **figure 1**, on a représenté les seuls éléments de la station hôte 200 utiles à la compréhension de l'invention. La station hôte 200 comprend, alors, outre une connectique USB 202 pour accueillir la clé 100, un système d'exploitation 204 exécutée par des moyens matériels classiques, une application de configuration réseau 206, une application de configuration 208 de la clé USB 100, ainsi que des disques réseaux virtuels 210₁, 210₂ et 210_{N} dont l'élaboration sera décrite plus en détail par la suite.

Le premier disque réseau virtuel 210₁ renseigne l'adresse suivante: //*Clé USB*/*Partition 1*/*.*

Le deuxième disque réseau virtuel 210₂ renseigne l'adresse suivante:
//*Clé USB*/*Partition 2*/*.*

On prévoit un même nombre de disque réseau virtuel que de partitions prévues dans la mémoire 114. On finit ainsi par le dernier disque réseau virtuel 210_{N} qui renseigne l'adresse suivante:
//*Clé USB*/*Partition N*/*.*

On décrit par la suite la mise en oeuvre d'une correspondance entre chaque partition 116ᵢ et un disque réseau virtuel 210ᵢ.

On note ici que le programme approprié pour permettre la mise en oeuvre d'une communication réseau de type TCP sur le lien USB 300 est intégré directement dans le système d'exploitation 204, par exemple par l'utilisation d'un pilote informatique correspondant. En variante, on peut prévoir une application spécifique dont l'utilisateur lance l'exécution.

On décrit maintenant, en référence à la **figure 2**, la configuration de la clé USB 100. Cette procédure a lieu lorsque la clé USB 100 est insérée dans un port USB d'un ordinateur de configuration, par exemple soit un ordinateur dans une usine, soit la station hôte 200.

A l'étape 400, on lance l'exécution de l'application de configuration 208 présente sur la station hôte 200 et on procède à la création des N partitions 116ᵢ dans la mémoire flash 114, de façon classique.

A l'étape 402, on charge, dans la mémoire RAM 110 de la clé 100, le micrologiciel 118 incluant les moyens logiciels de communication réseau par l'interface USB 300, et le serveur TCP 122. Ces moyens de communication réseau, généralement mettant en oeuvre le protocole classique de communication TCP/IP, définissent un périphérique réseau pour toute entité extérieure, ici la station hôte 200, à laquelle est connectée la clé USB 100.

En pratique, on charge ces différents programmes dans la mémoire ROM 112 ou dans la mémoire flash 114 avant exécution et donc copie dans la mémoire RAM 110, de sorte à permettre le lancement de ces programmes lors des connexions ultérieures de la clé 100 à une station hôte 200.

A l'étape 404, on attribue des terminaisons 120₁ et 120₂ au périphérique réseau conformément à la norme USB.

On peut notamment attribuer au périphérique réseau les terminaisons initialement associées à la mémoire physique 114, car comme on le verra par la suite, on n'adresse plus directement la mémoire 114 mais le serveur TCP 122 lorsque l'on souhaite accéder à des données en mémoire.

Enfin, à l'étape 406, on déclare des droits d'accès aux partitions 116ᵢ créées à l'étape 400. Comme évoqué précédemment, ce peut être des droits d'accès en lecture uniquement, en lecture et écriture, etc. Ces droits d'accès associés à chacune des partitions 116ᵢ sont enregistrés en mémoire ROM 112 de sorte que le serveur TCP 122 puisse en connaître le cas échéant.

Le serveur 122 fait l'interface entre l'entité électronique 100 et le système d'exploitation 204 de la station hôte 200. Ainsi, lorsqu'il (122) déclare les périphériques réseau, le serveur va questionner les droits d'accès. Puis selon le mode de réalisation envisagé :
- soit, il laisse le système d'exploitation 204 gérer les droits d'accès automatiquement, par exemple ce dernier (204) peut déclarer le périphérique comme étant un lecteur CDROM de sorte à protéger les données en écriture ;
- en variante, le serveur 122 gère lui-même les accès et refuse les requêtes de lecture ou d'écriture si, par exemple, le code PIN n'a pas été entré. En tant qu'interface, le serveur 122 a la possibilité de vérifier le type de requête et de questionner éventuellement le périphérique pour autoriser l'accès ou non.

En référence à la **figure 3**, on décrit maintenant la configuration de la station hôte 200.

A l'étape 410, on insère l'entité électronique 100 dans un port USB 202 de la station hôte 200. La station hôte 200 peut être déjà allumée, sinon on procède au démarrage de celle-ci pour passer à l'étape suivante 412.

A l'étape 412, le système d'exploitation 204 détecte l'insertion de l'étape 410 et énumère les périphériques présents sur le port USB 202. Si plusieurs entités physiques sont connectées à ce port USB 202, par exemple via un hub USB, le système d'exploitation énumère l'ensemble des fonctions USB accessibles sur chacune des entités.

En pratique pour la clé USB 100, le système d'exploitation 204 détecte l'ensemble des fonctions USB pourvues de terminaisons, c'est-à-dire configurées pour communiquer avec la station hôte 200.

En ce qui concerne notre exemple ci-dessus, le contrôleur USB de la station hôte 200 détecte les terminaisons 120₁ et 120₂ et énumère donc le périphérique réseau embarqué dans la clé USB 100.

A l'étape 414, le système d'exploitation 204 déclare la clé USB 100 en tant que périphérique réseau, par exemple par l'installation d'un pilote approprié. De façon classique, le serveur 122 déclare au système d'exploitation 204 de la station hôte 200 l'adresse IP correspondant au périphérique mémoire 114. Le serveur donne ensuite les détails de la mémoire 114 d'une manière similaire à ce qui est réalisé lorsqu'un périphérique est directement connecté à la station hôte 200.

A l'étape 416, on lance l'application de configuration réseau 206, préalablement installée sur la station hôte 200. Dans une variante cohérente avec le contenu de la clé et une installation automatique ou semi-automatique, on prévoit que l'application de configuration réseau est à exécution automatique, dite application *autorun*, et mémorisée dans la clé USB 100. Ainsi, lors de l'insertion de la clé 100 dans la station hôte 200, l'application est automatiquement exécutée.

On procède, à l'étape 418, à la configuration de la station hôte 200. En détail, l'application 206 monte, dans le système d'exploitation 204, autant de disques réseaux virtuels 210ᵢ que de partitions créées à l'étape 400 (dans l'exemple trois). En variante, on peut créer un nombre de disques réseaux différent du nombre de partitions, notamment si l'on ne souhaite pas utiliser toutes les partitions.

Chaque disque réseau virtuel 210ᵢ renseigne une adresse composée de la racine //Clé *USB*/ permettant d'identifier l'entité électronique 100 sur le port 202 et d'un répertoire /*Partition i*/ au nom de la partition à laquelle le disque réseau est associé. On observe donc à ce stade que l'ensemble des partitions 116ᵢ est représenté dans un unique système de fichiers par l'utilisation de répertoires distincts dans une même racine.

Ainsi, comme on va le voir par la suite en référence aux **figures 4** et 5, le serveur TCP 122 comprend un moyen de conversion d'adresses pour opérer la conversion d'adresses entre un système de fichiers principal, ici vu par le système d'exploitation 202, et lesdits systèmes de fichiers propres aux partitions 116ᵢ de sorte que ladite station hôte adresse, à ladite entité électronique, les données desdites partitions logiques dans ledit système de fichiers principal.

En référence à la **figure 4**, on décrit une utilisation de la clé USB 100 pour la lecture de données depuis la partition 116₂.

A l'étape 420, l'utilisateur de la station hôte 200 sollicite le système d'exploitation 204 pour lire une donnée, par exemple un fichier, stocké dans le disque réseau virtuel 210₂ "I".

A l'étape 422, le système d'exploitation 204 s'adresse à la clé USB 100 sur la terminaison "IN" 120₁ en transmettant, selon le protocole réseau TCP, une demande de lecture au contenu du fichier dans le répertoire partagé 210₂ associé à la partition 116₂. Cette demande en lecture renseigne alors l'adresse du fichier dans le répertoire partagé, par exemple:
//*Clé USB*/*Partition 2*/*lecture*/*fichier.doc*

A l'étape 424, la requête en lecture est reçue par le serveur TCP 122, via le programme de périphérique réseau dans la clé USB 100. Le serveur TCP 122 lit l'adresse dans la requête et la convertit en une adresse propre aux partitions 116ᵢ créées. C'est-à-dire que le serveur TCP 122 convertit l'adresse reçue dans le système de fichiers côté station hôte, en une adresse dans le système de fichiers propre à la partition visée, ici 116₂.

Dans le présent exemple, cette conversion comprend la suppression, dans l'adresse reçue, de la mention "*Clé USB*/". Ainsi, l'adresse résultante est //*Partition 2*/*lecture*/*fichier.doc*

En variante, des correspondances plus complexes entre le système de fichiers côté station hôte et les systèmes de fichiers des partitions peuvent être mises en oeuvre. On prévoit alors une table de conversion qui associe un répertoire partagé 210₂ (//*Clé USB*/*Partition 2*/) à une partition 116₂ et à une adresse spécifique dans cette partition 116₂ (//*Partition* 2/).

Le serveur TCP 122 récupère, dans ce cas, le début du chemin reçu, ici "//*Clé USB*/", puis détermine si ce chemin est une entrée de la table de conversion. Comme ce n'est pas le cas, il (122) agrège le répertoire suivant du chemin reçu, soit ici "//*Clé USB*/*Partition 2*/", et détermine si ce chemin est une entrée de la table de conversion. Le serveur TCP 122 procède ainsi jusqu'à détection d'un chemin dans la table de conversion. Dans ce cas, il récupère l'indication de la partition 116₂ correspondant et le chemin du répertoire associé dans cette partition: //*Partition 2*/. Le reste du chemin reçu, ici "*lecture*/*fichier.doc*" est ensuite agrégé: //*Partition 2*/*lecture*/*fichier.doc.*

A l'étape 426, le serveur TCP 122 vérifie si la demande d'accès est autorisée à l'aide des droits d'accès mémorisés dans la mémoire ROM 112 lors de l'étape 406. En cas d'accès interdit, le serveur TCP 122 renvoie à la station hôte 200 un message correspondant. En cas d'accès autorisé, le serveur TCP 122 émet une demande interne de lecture de l'adresse //*Partition 2*/*lecture*/*fichier.doc.* Un traitement classique de cette demande, entre autres à l'aide du micrologiciel et d'un contrôleur de la mémoire 114, est effectué dans la partition 116₂ de la clé USB 100 de sorte que le serveur TCP reçoit en réponse les données lues.

A l'étape 428, le serveur TCP 122 retourne les données ainsi lues au système d'exploitation 204, par le biais de la terminaison "OUT" 120₂ et du *pipe* associé.

En référence à la **figure 5**, on décrit maintenant une utilisation de la clé USB 100 pour l'écriture de données dans la partition 116_{N}.

A l'étape 430, l'utilisateur de la station hôte 200 sollicite le système d'exploitation 204 pour écrire une donnée dans le disque réseau virtuel 210_{N} "J", par exemple la copie d'un fichier stocké localement sur la station hôte vers ledit disque réseau.

A l'étape 432, le système d'exploitation 204 s'adresse à la clé USB 100 sur la terminaison "IN" 120₁ en transmettant, selon le protocole réseau TCP, une demande d'écriture du fichier dans le répertoire partagé 210_{N} associé à la partition 116_{N}. Cette demande en écriture renseigne alors l'adresse de destination du fichier dans le répertoire partagé, par exemple:

### //Clé USB/Partition N/écriture/fichier.doc

A l'étape 434, le serveur TCP 122 reçoit la requête en écriture et convertit l'adresse qu'elle contient de façon similaire à ce qui a été expliqué en lien avec l'étape 424. L'adresse résultante est alors:
//*Partition N*/*écriture*/*fichier.doc*

A l'étape 436, le serveur TCP 122 vérifie si la commande d'écriture est autorisée à l'aide des droits d'accès mémorisés dans la mémoire ROM 112. Dans l'affirmative, le serveur TCP 122 émet une commande interne d'écriture du fichier à l'adresse //*Partition N*/*écriture*/*fichier.doc.* L'écriture des données du fichier est alors réalisée dans la partition 116_{N} selon un traitement classique.

Un éventuel acquittement de l'opération d'écriture est remontée vers le serveur TCP 122 puis vers le système d'exploitation 204 par le biais de la terminaison "OUT" 120₂ et du *pipe* associé.

Les exemples qui précèdent ne sont que des modes de réalisation de l'invention qui ne s'y limite pas.

Notamment, l'invention peut s'appliquer conjointement à plusieurs mémoires matérielles 114 au sein d'une même entité électronique 100. Dans ce cas, on peut prévoir qu'un même serveur réseau 122 officie pour l'ensemble des mémoires matérielles. En variante, on peut prévoir un serveur 122 pour chacune des mémoires matérielles afin de cloisonner l'utilisation de celles-ci.

Dans un mode de réalisation, le serveur TCP 122 peut être directement intégré dans le micrologiciel embarqué 118, de sorte qu'à la configuration de l'entité électronique 100, on ne charge qu'une seule application.

Egalement, la correspondance entre une partition et une partie du système de fichiers principal peut être plus complexe que celle entre la partition et un répertoire à la racine du système de fichiers principal. En particulier, une partition peut être éclatée en plusieurs répertoires à l'intérieur dudit système de fichiers principal de telle sorte qu'il n'existe pas un répertoire dudit système de fichiers principal qui soit uniquement dédié à une partition donnée. Par exemple, les répertoires //*Partition i*/*lecture*/ et //*Partition i*/*écriture*/ des systèmes de fichiers propres aux partitions peuvent être respectivement associés aux répertoires suivants du système de fichiers principal: //*Clé USB*/*lecture*/*Partition i*/ et //Clé *USB*/*écriture*/*Partition i*/

## Revendications

1. Dispositif de gestion d'une mémoire physique (114) d'une entité électronique (100) apte à être connectée à une station hôte (200), ladite mémoire physique (114) comprenant une pluralité de partitions logiques (116₁, 116₂, 116_{N}) pour le stockage de données, chaque partition (116₁, 116₂, 116_{N}) étant adressable au travers d'un système de fichiers propre à elle même,
**caractérisé en ce qu'**il comprend un moyen de conversion (122) d'adresses entre un système de fichiers principal (210₁, 210₂, 210_{N}) de la station hôte et lesdits systèmes de fichiers propres des partitions de sorte que ladite station hôte (200) adresse, à ladite entité électronique (100), les données desdites partitions logiques dans ledit système de fichiers principal.

2. Dispositif selon la revendication précédente, comprenant des moyens de réseau aptes à communiquer avec ladite station hôte (200) en utilisant ledit système de fichiers principal.

3. Dispositif selon la revendication précédente, dans lequel lesdits moyens de réseau comprennent un serveur réseau (122) de type TCP comprenant ledit moyen de conversion.

4. Dispositif selon l'une des revendications précédentes, dans lequel lesdites partitions (116₁, 116₂, 116_{N}) correspondent chacune à un répertoire (210₁, 210₂, 210_{N}) dans ledit système de fichiers principal.

5. Dispositif selon la revendication précédente, dans lequel ledit moyen de conversion (122) est apte :
- à supprimer une partie initiale d'une adresse reçue dans le système de fichiers principal de sorte à fournir une adresse dans un des systèmes de fichiers propres, et
- à ajouter une partie d'adresse renseignant ledit dispositif à une adresse reçue dans un des systèmes de fichiers propres de sorte à fournir une adresse dans le système de fichiers principal.

6. Dispositif selon l'une des revendications 1 à 4, dans lequel ledit moyen de conversion (122) comprend une table de conversion associant au moins une adresse de répertoire (210₁, 210₂, 210_{N}) dans ledit système de fichiers principal à une adresse dans un système de fichier de l'une desdites partitions (116₁, 116₂, 116_{N}).

7. Dispositif selon la revendication précédente, dans lequel ledit moyen de conversion (122) est apte :
- à lire une partie initiale d'une adresse reçue ;
- à déterminer, dans ladite table de conversion, une entrée comprenant ladite partie initiale lue ;
- à lire, dans ladite entrée déterminée, l'adresse associée à ladite partie initiale ; et
- à substituer, dans ladite adresse reçue, ladite partie initiale par ladite adresse associée.

8. Dispositif selon l'une quelconque des revendications précédentes, comprenant une application de configuration de ladite station hôte (220), ladite application de configuration étant à exécution automatique lors de la connexion de l'entité électronique (100) à ladite station hôte (200) et étant apte à configurer, dans le système de fichiers principal sur ladite station hôte (200), des disques réseaux (210₁, 210₂, 210_{N}) correspondant auxdites partitions (116₁, 116₂, 116_{N})

9. Procédé d'accès à une mémoire physique (114) d'une entité électronique (100) apte à être connectée à une station hôte (200), ladite mémoire physique (114) comprenant une pluralité de partitions logiques (116₁, 116₂, 116_{N}) pour le stockage de données, chaque partition (116₁, 116₂, 116_{N}) étant adressable au travers d'un système de fichiers propre à elle même, le procédé comprenant un étape de conversion (424, 434) d'adresses entre un système de fichiers principal de la station hôte et lesdits systèmes de fichiers propres des partitions de sorte que ladite station hôte (200) adresse, à ladite entité électronique (100), les données desdites partitions logiques (116₁, 116₂, 116_{N}) dans ledit système de fichiers principal (210₁, 210₂, 210_{N}).

10. Procédé selon la revendication précédente, dans lequel la communication entre ladite station hôte et ladite entité électronique met en oeuvre le protocole de communication selon la norme USB.

11. Procédé selon l'une des revendications 9 et 10, comprenant une étape préalable d'attribution (404) de deux terminaisons (120₁, 120₂) selon la norme USB à un périphérique réseau compris dans ladite entité électronique (100), ledit périphérique réseau comprenant des moyens de réseau aptes à communiquer avec ladite station hôte (200) en utilisant ledit système de fichiers principal, et des moyens de conversion (122) aptes à réaliser ladite étape de conversion.

12. Procédé selon l'une des revendications 9 à 11, comprenant les étapes suivantes :
- lire une partie initiale d'une adresse reçue ;
- déterminer une adresse associée à ladite partie initiale lue ; et
- substituer, dans ladite adresse reçue, ladite partie initiale par ladite adresse associée.

13. Procédé selon la revendication précédente, dans lequel ladite détermination d'une deuxième partie comprend :
- la détermination, dans une table de conversion associant au moins une adresse de répertoire (210₁, 210₂, 210_{N}) dans ledit système de fichiers principal à une adresse dans un système de fichier de l'une desdites partitions (116₁, 116₂, 116_{N}), d'une entrée comprenant ladite partie initiale lue ; et
- la lecture, da ns ladite entrée déterminée, de l'adresse associée à ladite partie initiale.

14. Entité électronique (100) apte à être connectée à une station hôte (200), l'entité comprenant une mémoire physique (114) et un dispositif de gestion de la mémoire physique (114) selon l'une quelconque des revendications 1 à 8.

15. Entité électronique (100) selon la revendication précédente, **caractérisé en ce** l'entité est une clé USB.

## Claims

1. A device for managing a physical memory (114) of an electronic entity (100), said electronic entity (100) being adapted to be connected to a host station (200), said physical memory (114) comprising a plurality of logical partitions (116₁, 116₂, 116_{N}) for the storage of data, each partition (116₁, 116₂, 116_{N}) being addressable through its own file system,
**characterized in that** it comprises a conversion means (122) for converting addresses between a main file system (210₁, 210₂, 210_{N}) of the host station and said own file systems of the partitions such that said host station (200) addresses the data in said logical partitions to said electronic entity (100) using said main file system.

2. A device according to the preceding claim, comprising network means adapted to communicate with said host station (200) by using said main file system.

3. A device according to the preceding claim, in which said network means comprise a network server (122) of TCP type comprising said conversion means.

4. A device according to one of the preceding claims, in which said partitions (116₁, 116₂, 116_{N}) each correspond to a directory (210₁, 210₂, 210_{N}) in said main file system.

5. A device according to the preceding claim, in which said conversion means (122) is adapted to:
- delete an initial part of an address received in the main file system so as to provide an address in one of the own file systems, and
- add an address part, providing information on said device, to an address received in one of the own file systems so as to provide an address in the main file system.

6. A device according to one of claims 1 to 4, in which said conversion means (122) comprises a conversion table associating at least one directory address (210₁, 210₂, 210_{N}) in said main file system with an address in a file system of one of said partitions (116₁, 116₂, 116_{N}).

7. A device according to the preceding claim, in which said conversion means (122) is adapted to:
- read an initial part of a received address;
- determine, in said conversion table, an entry comprising said read initial part;
- read, in said determined entry, the address associated with said initial part; and
- substitute, in said received address, said initial part by said associated address.

8. A device according to any one of the preceding claims, comprising an application for configuring said host station (220), said configuring application executing automatically on connection of the electronic entity (100) to said host station (200), and being adapted to configure, in the main file system on said host station (200), network disks (210₁, 210₂, 210_{N}) corresponding to said partitions (116₁, 116₂, 116_{N}).

9. A method of accessing a physical memory (114) of an electronic entity (100) adapted to be connected to a host station (200), said physical memory (114) comprising a plurality of logical partitions (116₁, 116₂, 116_{N}) for the storage of data, each partition (116₁, 116₂, 116_{N}) being addressable through its own file system, the method comprising a step (424, 434) of converting addresses between a main file system of the host station and said own file systems of the partitions such that said host station (200) addresses the data in said logical partitions to said electronic entity (100) using said main file system (2101, 2102, 210N).

10. A method according to the preceding claim, in which the communication between said host station and said electronic entity implements the communication protocol according to the USB standard.

11. A method according to one of claims 9 and 10, comprising a prior step (404) of attributing two end points (120₁, 120₂) according to the USB standard to a network peripheral comprised in said electronic entity (100), said network peripheral comprising network means adapted to communicate with said host station (200) by using said main file system, and conversion means (122) adapted to perform said conversion step.

12. A method according to one of claims 9 to 11, comprising the following steps:
- reading an initial part of a received address;
- determining an address associated with said read initial part; and
- substituting, in said received address, said initial part by said associated address.

13. A method according to the preceding claim, in which said determining of a second part comprises:
- determining, in a conversion table associating at least one directory address (210₁, 210₂, 210_{N}) in said main file system with an address in a file system of one of said partitions (116₁, 116₂, 116_{N}), an entry comprising said initial read part; and
- reading, in said determined entry, the address associated with said initial part.

14. An electronic entity (100) adapted to be connected to a host station (200), the entity comprising a physical memory (114) and a device for managing the physical memory (114) according to any one of claims 1 to 8.

15. An electronic entity (100) according to the preceding claim, **characterized in that** the entity is a USB key.

## Patentansprüche

1. Vorrichtung zur Verwaltung eines physischen Speichers (114) einer elektronischen Einheit (100), die geeignet ist, mit einer Host-Station (200) verbunden zu sein, wobei der physische Speicher (114) eine Mehrzahl logischer Unterteilungen (116₁, 116₂, 116_{N}) zur Speicherung von Daten umfasst, wobei jede Unterteilung (116₁, 116₂, 116_{N}) mittels eines ihr selbst eigenen Dateisystems adressierbar ist,
**dadurch gekennzeichnet, dass** sie ein Mittel (122) zur Umsetzung von Adressen zwischen einem Hauptdateisystem (210₁, 210₂, 210_{N}) der Host-Station und den eigenen Dateisystemen der Unterteilungen umfasst, derart, dass die Host-Station (200) die Daten der logischen Unterteilungen in dem Hauptdateisystem an die elektronische Einheit (100) adressiert.

2. Vorrichtung nach dem vorhergehenden Anspruch, umfassend Netzwerkmittel, die geeignet sind, mit der Host-Station (200) unter Verwendung des Hauptdateisystems zu kommunizieren.

3. Vorrichtung nach dem vorhergehenden Anspruch, wobei die Netzwerkmittel einen Netzwerkserver (122) des Typs TCP umfassen, der das Umsetzungsmittel umfasst.

4. Vorrichtung nach einem der vorhergehenden Ansprüche, wobei die Unterteilungen (116₁, 116₂, 116_{N}) jeweils einem Verzeichnis (210₁, 210₂, 210_{N}) in dem Hauptdateisystem entsprechen.

5. Vorrichtung nach dem vorhergehenden Anspruch, wobei das Umsetzungsmittel (122) für Folgendes geeignet ist:
- zum Entfernen eines Anfangsabschnitts einer im Hauptdateisystem empfangenen Adresse, derart, dass eine Adresse in einem der eigenen Dateisysteme geliefert wird, und
- zum Hinzufügen eines Adressabschnitts, der die Vorrichtung angibt, zu einer in einem der eigenen Dateisysteme empfangenen Adresse, derart, dass eine Adresse im Hauptdateisystem geliefert wird.

6. Vorrichtung nach einem der Ansprüche 1 bis 4, wobei das Umsetzungsmittel (122) eine Umsetzungstabelle umfasst, die mindestens eine Verzeichnisadresse (210₁, 210₂, 210_{N}) im Hauptdateisystem mit einer Adresse in einem Dateisystem von einer der Unterteilungen (116₁, 116₂, 116_{N}) verknüpft.

7. Vorrichtung nach dem vorhergehenden Anspruch, wobei das Umsetzungsmittel (122) für Folgendes geeignet ist:
- zum Lesen eines Anfangsabschnitts einer empfangenen Adresse;
- zum Bestimmen eines Eintrags, der den gelesenen Anfangsabschnitt umfasst, in der Umsetzungstabelle;
- zum Lesen der mit dem Anfangsabschnitt verknüpften Adresse in dem bestimmten Eintrag; und
- zum Ersetzen des Anfangsabschnitts in der empfangenen Adresse durch die verknüpfte Adresse.

8. Vorrichtung nach einem der vorhergehenden Ansprüche, umfassend eine Anwendung zur Konfiguration der Host-Station (220), wobei die Konfigurationsanwendung bei der Verbindung der elektronischen Einheit (100) mit der Host-Station (200) automatisch ausgeführt wird und geeignet ist, im Hauptdateisystem auf der Host-Station (200) Netzwerkplatten (210₁, 210₂, 210_{N}) zu konfigurieren, die den Unterteilungen (116₁, 116₂, 116_{N}) entsprechen.

9. Verfahren zum Zugriff auf einen physischen Speicher (114) einer elektronischen Einheit (110), die geeignet ist, mit einer Host-Station (200) verbunden zu werden, wobei der physische Speicher (114) mehrere logische Unterteilungen (116₁, 116₂, 116_{N}) zur Speicherung von Daten umfasst, wobei jede Unterteilung (116₁, 116₂, 116_{N}) mittels eines ihr selbst eigenen Dateisystems adressierbar ist, wobei das Verfahren einen Schritt der Umsetzung (424, 434) von Adressen zwischen einem Hauptdateisystem der Host-Station und den eigenen Dateisystemen der Unterteilungen umfasst, derart, dass die Host-Station (200) die Daten der logischen Unterteilungen (116₁, 116₂, 116_{N}) in dem Hauptdateisystem (210₁, 210₂, 210_{N}) an die elektronische Einheit (100) adressiert.

10. Verfahren nach dem vorhergehenden Anspruch, wobei die Kommunikation zwischen der Host-Station und der elektronischen Einheit das Kommunikationsprotokoll gemäß der USB-Norm einsetzt.

11. Verfahren nach einem der Ansprüche 9 und 10, umfassend einen vorherigen Schritt der Zuweisung (404) zweier Endungen (120₁, 120₂) zu einem Netzwerk-Peripheriegerät, das in der elektronischen Einheit (100) enthalten ist, gemäß der USB-Norm, wobei das Netzwerk-Peripheriegerät Netzwerkmittel umfasst, die geeignet sind, unter Verwendung des Hauptdateisystems mit der Host-Station (200) zu kommunizieren, und Umsetzungsmittel (122), die geeignet sind, den Umsetzungsschritt auszuführen.

12. Verfahren nach einem der Ansprüche 9 bis 11, das die folgenden Schritte umfasst:
- Lesen eines Anfangsabschnitts einer empfangenen Adresse;
- Bestimmen einer mit dem gelesenen Anfangsabschnitt verknüpften Adresse; und
- Ersetzen des Anfangsabschnitts in der empfangenen Adresse durch die verknüpfte Adresse.

13. Verfahren nach dem vorhergehenden Anspruch, wobei die Bestimmung eines zweiten Abschnitts Folgendes umfasst:
- die Bestimmung eines Eintrags, der den gelesenen Anfangsabschnitt umfasst, in einer Umsetzungstabelle, die mindestens eine Verzeichnisadresse (210₁, 210₁, 210_{N}) in dem Hauptdateisystem mit einer Adresse in einem Dateisystem von einer der Unterteilungen (116₁, 116₂, 116_{N}) verknüpft,
- das Lesen der mit dem Anfangsabschnitt verknüpften Adresse in dem bestimmten Eintrag.

14. Elektronische Einheit (100), die geeignet ist, mit einer Host-Station (200) verbunden zu sein, wobei die Einheit einen physischen Speicher (114) und eine Vorrichtung zur Verwaltung des physischen Speichers (114) nach einem der Ansprüche 1 bis 8 umfasst.

15. Elektronische Einheit (100) nach dem vorhergehenden Anspruch, **dadurch gekennzeichnet, dass** die Einheit ein USB-Stick ist.
